# EUROPEAN PATENT APPLICATION

(11) **EP 3 616 502 A1**
(43) Date of publication of application: **04.03.2020**
(21) Application number: 18813640.2
(22) Date of filing: 28.05.2018
(51) Int. Cl.: A01G 25/02

(54) **EMITTER, AND DRIP IRRIGATION TUBE PROVIDED WITH SAME**

(30) Priority: 06.06.2017 JP 2017111775
(71) Applicant: Enplas Corporation, Kawaguchi-shi, Saitama 332-0034 (JP)
(72) Inventor: YANAGISAWA, Kazuma, Kawaguchi-shi, Saitama 332-0034 (JP)
(74) Representative: J A Kemp LLP
(86) International application number: PCT/JP2018/020361
(87) International publication number: WO 2018/225562

(57) **Abstract**

The present invention aims to provide an emitter and a drip irrigation tube that can suppress the variations in the discharge amount of the liquid caused by the temperature of the liquid in the drip irrigation tube. The emitter (120) of the present invention is disposed on an inner wall of a tube (110) including a discharge port (112), for regulating discharge of irrigation liquid from an inside of the tube (110) to an outside of the tube (110) via the discharge port (112). The emitter (120) includes an intake portion; a regulating unit; a discharge portion; and a flow path. The regulating unit includes: a recess; and a film. The film is fixed in a state of covering an inner space of the recess, and a region of the film covering the inner space of the recess is a diaphragm portion. The flow path has a decompression region for decompressing the taken-in liquid, the decompression region has a serpentine shape, and in the decompression region, a fluctuation ratio of a cross-sectional area in a direction perpendicular to an axial direction is within a range of 1 ± 0.1 with reference to a smallest cross-sectional area.

## Description

### TECHNICAL FIELD

The present invention relates to an emitter and a drip irrigation tube provided with the same.

### BACKGROUND ART

In the cultivation of plants, drip irrigation is known. The drip irrigation method is a method in which a tube for drip irrigation is arranged in the soil, and irrigation liquids such as water and liquid fertilizer are dripped from the tube to the soil. In recent years, problems such as the desertification due to global warming and the depletion of water resources have arisen, and the drip irrigation method has attracted particular attention because it is possible to minimize the consumption of irrigation liquids.

The drip irrigation tube usually includes a tube having a plurality of through holes through which irrigation liquid is discharged, and a plurality of emitters (also referred to as "drippers") for discharging irrigation liquid from each of the through holes. As a type of emitter, for example, an emitter used by being connected to the inner wall of the tube is known (for example, see Patent Literature 1).

The emitter includes an intake portion for taking in the liquid from the tube, a decompression flow path for flowing a liquid in the emitter while decompressing the liquid, and a regulating unit that regulates a discharge amount of the liquid that has been flowed through the decompression flow path to be discharged from the tube via the emitter, in accordance with a pressure of the liquid in the tube. A diaphragm that deforms in response to the pressure of the liquid in the tube is used as the regulating unit, and a film having elasticity such as a silicone rubber film or the like is used as the diaphragm.

Since the emitter can regulate the discharge amount in accordance with the pressure in the tube, for example, even when the pressure of the liquid flowing in the tube fluctuates or the pressure of the liquid differs depending on the position in the tube, it is possible to discharge the liquid without variation.

### Citation List

### Patent Literature

Patent Literature 1: JP 2010-046094 A

### SUMMARY OF INVENTION

### Technical Problem

However, the inventors of the present invention have newly found that the discharge amount varies depending also on the temperature of the liquid in the tube.

It is therefore an object of the present invention to provide an emitter and a drip irrigation tube that can suppress the variations in the discharge amount of the liquid caused by the temperature of the liquid in the drip irrigation tube.

### Solution to Problem

In order to achieve the above object, the present invention provides an emitter to be disposed on an inner wall of a tube including a discharge port, for regulating discharge of irrigation liquid from an inside of the tube to an outside of the tube via the discharge port, including:
an intake portion for taking in the liquid in the tube;
a regulating unit that regulates a discharge amount of the liquid taken in;
a discharge portion for discharging the taken-in liquid via the discharge port of the tube; and
a flow path communicating the intake portion and the regulating unit, wherein
the regulating unit includes:
   a recess; and
   a film,
   the film is fixed in a state of covering an inner space of the recess,
   a region of the film covering the inner space of the recess is a diaphragm portion,
the flow path has a decompression region for decompressing the taken-in liquid,
the decompression region has a serpentine shape, and
in the decompression region, a fluctuation ratio of a cross-sectional area in a direction perpendicular to an axial direction is within a range of 1 ± 0.1 with reference to a smallest cross-sectional area.

The present invention also provides a drip irrigation tube including:
a tube; and
an emitter, wherein
the emitter is the emitter according to the present invention,
the tube includes a discharge port for discharging an irrigation liquid,
the emitter is disposed on an inner wall of the tube at a site including the discharge port, and
the discharge portion of the emitter and the discharge port of the tube correspond to each other.

### Advantageous Effects of Invention

According to the emitter and the drip irrigation tube of the present invention, it is possible to suppress the variations in the discharge amount of the liquid caused by the temperature of the liquid in the drip irrigation tube.

### BRIEF DESCRIPTION OF DRAWINGS

[FIGs. 1A and 1B] FIGs. 1A and 1B are cross-sectional views each schematically showing a drip irrigation tube in the first embodiment.
[FIGs. 2A and 2B] FIGs. 2A and 2B are perspective views of an emitter according to the first embodiment.
[FIGs. 3A to 3C] FIGs. 3A to 3C are plan views of the emitter according to the first embodiment.
[FIGs. 4A and 4B] FIGs. 4A and 4B are cross-sectional views of the emitter according to the first embodiment.
[FIG. 5] FIG. 5 is a schematic diagram for showing an example of a decompression region in the emitter according to the first embodiment.
[FIGs. 6A and 6B] FIGs. 6A and 6B are plan views of an emitter according to the comparative example.
[FIGs 7A and 7B] FIGs 7A and 7B are diagrams simulating the states of water passing through the decompression regions of the emitter according to the example and the emitter according to the comparative example.
[FIGs. 8A and 8B] FIGs. 8A and 8B are graphs showing the relationship between the pressure of water in the tube and the discharge amount per hour of water discharged from the discharge port of the tube in the emitter according to the example and the emitter according to the comparative example.

### DESCRIPTION OF EMBODIMENTS

The inventors of the present invention have intensively studied the reason why the discharge amount of the emitter varies depending on the temperature of the liquid in the tube, and found the following. The emitter uses the deflection of the diaphragm of the film, which is dependent on the pressure received from the liquid in the tube, to regulate the discharge amount. However, as the temperature of the liquid passing through the tube becomes relatively high, depending on the temperature, the tensile modulus of the diaphragm becomes relatively low. Thus, it has been found that, even if the pressure applied to the diaphragm from the liquid in the tube is the same, for example, the diaphragm, which is not so deflected at the liquid temperature on the low temperature side (for example, about 23°C), is more deflected at the liquid temperature on the high temperature side (for example, about 40°C), thereby decreasing the discharge amount. Hence, the inventors of the present invention have conceived that the negative temperature dependence of the diaphragm, which is given to the discharge amount, is cancelled by using the positive temperature dependence, to suppress the discharge amount from decreasing. Specifically, the viscosity of the liquid is temperature dependent, and the viscosity decreases as the temperature of the liquid rises. Thus, when the liquid is allowed to flow at the same pressure, the higher the liquid temperature, the higher the flow rate, and the liquid has a positive temperature dependence. Therefore, by setting the decompression region in the flow path to the above-described conditions, the temperature dependence of viscosity due to the liquid temperature is easily developed, and the discharge amount decreased by the negative temperature dependence of the diaphragm is compensated by the positive temperature dependence of the liquid, thereby suppressing the decrease of the discharge amount. Thus, the emitter of the present invention can suppress the influence of the temperature of the liquid in the tube and suppress the discharge amount from decreasing.

In the emitter of the present invention, for example, the diaphragm portion is made of thermoplastic resin.

In the emitter of the present invention, for example, the thermoplastic resin is polyethylene.

In the emitter of the present invention, for example, the recess has a through hole communicating with the discharge portion and a slit communicating with the through hole. An edge portion forming an upper surface-side opening of the through hole, excluding the slit, is a valve seat portion for the film. In a state where the emitter is disposed in the tube, when no liquid is present in the tube, the diaphragm portion of the film is not in contact with the valve seat portion, and when the liquid is present in the tube, the diaphragm portion of the film can be in contact with the valve seat portion in accordance with a pressure of the liquid.

In the emitter of the present invention, for example, as to the through hole communicating with the discharge port, the periphery of the upper surface-side opening of the through hole may protrude upward. Hereinafter, the protruding region is also referred to as a "cylindrical region" around the through hole. In this case, in the cylindrical region, for example, the upper surface of the protrusion has the slit in a part thereof, and the inner edge portion of the upper surface of the protrusion excluding the slit is a valve seat portion for the film.

The emitter and the drip irrigation tube of the present invention are characterized in that the shape of the decompression region of the flow path in plan view is a serpentine shape and the fluctuation ratio of the cross-sectional area in the decompression region of the flow path is set to the above-described range, and other configurations are not particularly limited.

An embodiment of the emitter and the drip irrigation tube including the same of the present invention will be described with reference to the drawings. The emitter and the drip irrigation tube of the present invention are not limited or restricted in any way by the embodiment described below. In each of the drawings, identical parts are indicated with identical reference signs. In each of the drawings, for convenience in explanation, the structure of each component may be appropriately simplified, and the size, the ratio, and the like of components are not limited to the conditions in the drawing.

In each of the drawings, for convenience sake, "the axial direction of the tube" denotes the direction connecting the openings at both ends of the tube and "the vertical direction of the tube" denotes the direction perpendicular to the axial direction and also the plumb direction when the tube is placed on the table, unless otherwise stated. In each of the drawings, for convenience sake, the emitter is shown in a state where it is disposed on the inner wall in the downward direction of the tube, unless otherwise stated. In each of the drawings, for convenience sake, as to the vertical direction of the emitter, the opening side of the recess (the side on which the film is disposed) is referred to as the upward direction, the bottom surface side of the recess is referred to as the downward direction, the upward direction of the emitter is also referred to as the front surface side of the emitter, and the downward direction of the emitter is also referred to as the back surface side of the emitter, unless otherwise stated. The height of the emitter denotes the length in the vertical direction, the length of the emitter denotes the length in the longitudinal direction (direction along the axial direction of the tube), and the width of the emitter denotes the length in the direction perpendicular to the vertical direction and the longitudinal direction (also referred to as the lateral direction or the width direction). In the emitter, the decompression region of the flow path is shown in a state of extending in the longitudinal direction.

### [First embodiment]

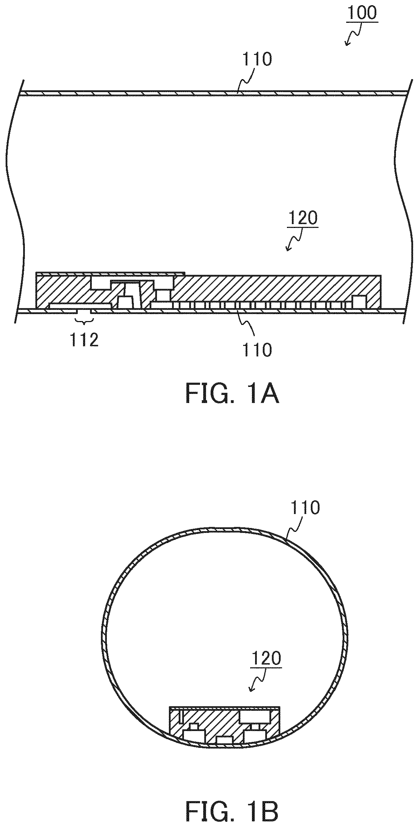

FIGs. 1A and 1B are schematic views each showing the state where the emitter is disposed in the drip irrigation tube. FIG. 1A is a cross-sectional view in the axial direction and the vertical direction of the tube, and FIG. 1B is a cross-sectional view in the direction perpendicular to the axial direction of the tube. In the emitter of Embodiment 1, the bottom surface of the recess has the cylindrical region around the upper surface-side opening of the through hole. The present invention, however, is not limited thereto, and the bottom surface of the recess may not have the cylindrical region.

Hereinafter, the configurations of the drip irrigation tube and the emitter will be described, and thereafter the functions and effects thereof will be described.

A drip irrigation tube 100 will be described. As shown in FIGs. 1A and 1B, the drip irrigation tube 100 includes a tube 110 and a plurality of emitters 120, and the emitters 120 are disposed inside the tube 110 on the inner wall thereof.

The tube 110 is a hollow tube for allowing an irrigation liquid to flow therethrough. The material for the tube 110 is not particularly limited, and is, for example, polyethylene. The tube wall of the tube 110 has a plurality of through holes 112 at predetermined intervals (e.g., 200 to 500 mm) in the axial direction of the tube 110. The through hole 112 is a discharge port 112 for discharging the liquid inside the tube 110 to the outside of the tube 110. The shape and size of the hole of the discharge port 112 are not particularly limited as long as the liquid can be discharged. The shape of the hole of the discharge port 112 is, for example, a circle, and the diameter thereof is, for example, 1.5 mm.

A plurality of emitters 120 are disposed on the inner wall of the tube 110 at positions corresponding to the discharge ports 112. The shape and area of the cross-section in the direction perpendicular to the axial direction of the tube 110 is not particularly limited as long as the emitter 120 can be disposed therein.

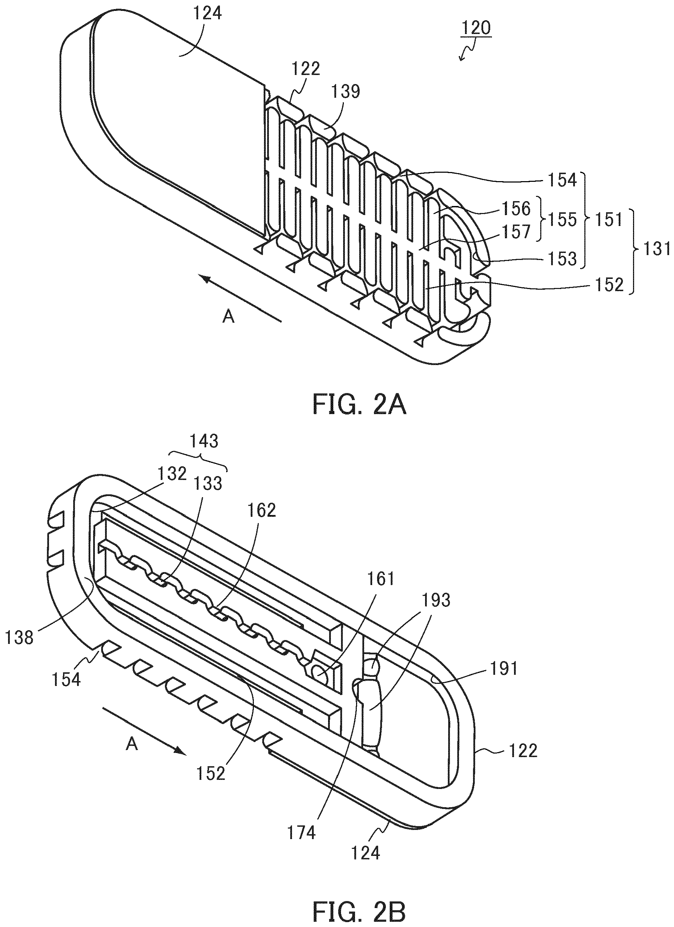

In use of the drip irrigation tube 100, the emitter 120 only is required to be disposed so as not to be detached from the tube 110, for example. The emitter 120 is connected to the tube 110, for example, and the drip irrigation tube 100 can be produced by connecting a back surface (138 in FIG. 2 described below) of the emitter 120 to the inner wall of the tube 110, for example. The method of connecting the tube 110 and the emitter 120 is not particularly limited, and may be, for example, welding of a resin material constituting the emitter 120 or the tube 110, bonding with an adhesive, or the like. In the drip irrigation tube 100, the discharge port 112 may be formed, for example, before or after disposing the emitter 120 in the tube 110.

Next, the emitter 120 will be described. Here, the front surface side of the emitter 120 is the side of the emitter 120 facing the inner space of the tube 110 when it is disposed in the tube 110, and the back surface side of the emitter 120 is the side facing the inner wall of the tube 110 when it is disposed in the tube 110.

FIGs. 2A and 2B are perspective views each schematically showing the emitter 120. FIG. 2A is a perspective view of the emitter 120 seen from the front surface 139 side, and FIG. 2B is a perspective view of the emitter 120 seen from the back surface 138 side. For convenience sake, in the longitudinal direction of the emitter 120, the side on which a film 124 is not disposed is referred to as an upstream side, and the side on which the film 124 is disposed is referred to as a downstream side. The upstream side and downstream side are not intended to indicate the flow of liquid in the emitter 120, and are merely definitions for convenience in explanation. In each of FIGs. 2A and 2B, the direction of the emitter 120 is indicated by the arrow A, and the opposite to the arrowhead side of the arrow indicates the upstream side and the arrowhead side of the arrow indicates the downstream side (hereinafter, the same applies).

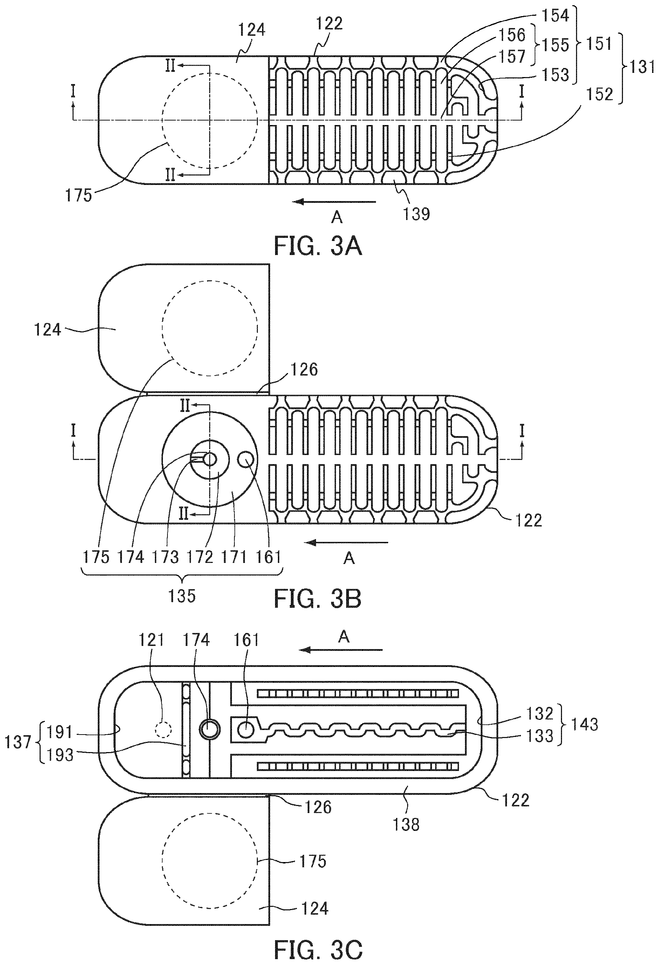

FIGs. 3A to 3C are plan views each schematically showing the emitter 120. FIG. 3A is a top view (plan view of the front surface side) of the emitter 120, and FIGs. 3B and 3C are schematic views each showing the emitter 120 in a state in which the film 124 is connected to an emitter body 122 excluding the film 124 via a hinge portion 126 before the film 124 is disposed on the emitter body 122. Specifically, FIG. 3B is a plan view seen from the front surface side, and FIG. 3C is a plan view seen from the back surface side.

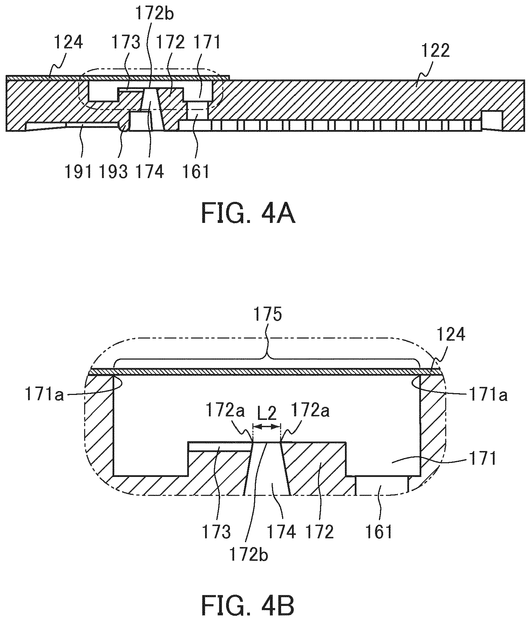

FIGs. 4A to 4C are cross-sectional views each schematically showing the emitter 120. FIG. 4A is a cross-sectional view taken along the line I-I in FIG. 3A. FIG. 4B is a partial cross-sectional view of the region surrounded by the dotted line in FIG. 4A, i.e., a partial cross-sectional view in the vicinity of a regulating unit 135.

As shown in FIGs. 1A and 1B, the emitter 120 is disposed inside the tube on the inner wall thereof in a state of covering the discharge port 112. The overall shape of the emitter 120 is not particularly limited as long as, for example, the emitter 120 can be in close contact with the inner wall of the tube 110 to cover the discharge port 112. In the present embodiment, the planar shape of the emitter 120 is, for example, a substantially rectangular shape with four corners chamfered by R. The back surface 138 of the emitter 120 being in contact with the inner wall of the tube 110 includes a protrusion in the cross-section in the direction perpendicular to the axial direction of the tube, and the protrusion has a substantially arc shape toward the inner wall of the tube 110 so as to be along the inner wall of the tube 110. The overall size of the emitter 120 is not particularly limited, and for example, the length in the longitudinal direction may be 25 mm, the length in the lateral direction may be 8 mm, and the height in the vertical direction may be 2.5 mm.

The emitter 120 is formed by disposing the film 124 on the emitter body 122. The film 124 and emitter body 122 may be connected to each other via the hinge portion 126, for example, as shown in FIGs. 3A and 3B, or the emitter body 122 and film 124 may be integrally molded. In this case, the film 124 may be rotated to the emitter body 122 side about the hinge portion 126 as an axis and may be disposed and fixed on the emitter body 122. The hinge portion 126 may be cut and removed, for example, after the film 124 is fixed to the emitter body 122. The thicknesses of the film 124 and the hinge portion 126 are not particularly limited, and are, for example, the same. The thickness of the film 124 is not particularly limited, and is, for example, 0.3 mm.

The emitter body 122 and the film 124 may be formed separately, and then the film 124 may be disposed and fixed on the emitter body 122, for example. The method of fixing the film 124 to the emitter body 122 is not particularly limited, and may be, for example, welding of a material constituting the emitter body 122 or the film 124, bonding with an adhesive, or the like. The site of the film 124 to be fixed to the emitter body 122 is not particularly limited, and is, for example, a region outside the diaphragm portion of the film 124.

The emitter body 122 preferably has flexibility, for example, and is preferably formed of a flexible material. Since the film 124 includes a diaphragm portion, as will be described below, the film 124 is preferably flexible and formed of a flexible material. The flexible material can be, for example, a thermoplastic resin. The emitter body 122 and the film 124 may be formed of the same material, or may be formed of different materials, for example, and are preferably formed of the same material when they are integrally formed as described above. The flexible material may include, for example, one type or two or more types. The flexible material may be, for example, a resin, a rubber, or the like, and the resin may be, for example, polyethylene, silicone, or the like. The thermoplastic resin can be, for example, polyethylene. The flexibility of the emitter body 122 or the film 124 can be adjusted, for example, by the use of an elastic material such as an elastic resin. The method of adjusting the flexibility is not particularly limited, and includes, for example, selection of an elastic resin, adjustment of a mixing ratio of the elastic material to a hard material such as a hard resin, and the like.

The emitter 120 includes an intake portion 131, a regulating unit 135, a discharge portion 137, and a flow path 143. In the emitter 120, for example, the upstream side is a region having the intake portion 131, the downstream side is a region having the regulating unit 135 and the discharge portion 137, and these regions communicate with each other via the flow path 143.

The intake portion 131 is a portion for introducing the liquid in the tube 110 into the emitter 120, and is provided on the front surface 139 side of the emitter 120. When the border between the front surface 139 side of the emitter 120 and the back surface 138 side of the emitter 120 is the base of the emitter 120, as shown in FIGs. 2A, 3A, and 3B, the base of the emitter body 122 has, at its outer edge, a protruded outer wall protruding upward to form an intake recess 153 on the upstream side of the emitter 120. The outer wall of the intake recess 153 has a plurality of slits 154. The base of the emitter 120 includes a first protrusion 157 extending in the longitudinal direction and a plurality of second protrusions 156 extending toward both ends in the lateral direction in the inner region of the intake recess 153. The base of the emitter 120, i.e., the bottom surface of the intake recess 153, has a pair of intake through holes 152 communicating with the back surface 138 side in the longitudinal direction orthogonal to the plurality of second protrusions 156 extending toward both ends in the lateral direction. In the emitter 120, the intake recess 153, the slit 154 of the outer wall, and a protrusion group 155 (first protrusion 157 and second protrusion 156) allow the liquid to flow into the emitter 120 and prevent suspended matters in the liquid from entering and thus are also referred to as a screen portion 151, for example, as will be described below. The screen portion 151 and the pair of intake through holes 152 serve as the intake portion 131 in the emitter 120.

The depth of the intake recess 153 surrounded by the outer wall is not particularly limited, and can be appropriately determined depending on the size of the emitter 120, for example.

The shape of the slit 154 in the outer wall is not particularly limited and is preferably in a shape that prevents the suspended matters from entering, as described above. In FIGs. 2A and 3A, the slit 154 has a shape such that the width gradually increases from the outer side surface toward the inner side surface at the outer wall of the intake recess 153. The slit 154 has preferably, for example, such a wedge wire structure. In the case where the slit 154 has the above-described structure, for example, the pressure loss of the liquid flowing into the emitter 120 can be suppressed in the intake recess 153.

The position and number of protrusion groups 155 are not particularly limited and preferably are the position and number that allow the liquid to flow into the emitter 120 and prevent suspended matters in the liquid from entering as described above. The second protrusion 156 has a shape such that the width gradually decreases from the front surface 139 of the emitter body 122 toward the bottom surface of the intake recess 153, for example. That is, it is preferable that the spaces between the adjacent second protrusions 156 of the plurality of second protrusions 156 in the arrangement direction have a so-called wedge wire structure. When the space between the second protrusions 156 has the above-described structure, for example, the pressure loss of the liquid flowing into the intake recess 153 can be suppressed. The distance between the adjacent second protrusions 156 is not particularly limited, and is preferably the distance that allows the above-mentioned function to be exhibited, for example.

For example, similarly to the second protrusion 156, the first protrusion 157 may have a shape such that the width gradually decreases from the front surface 139 of the emitter body 122 toward the bottom surface of the intake recess 153 or may have a shape such that a certain width is kept from the front surface 139 of the emitter body 122 toward the bottom surface of the intake recess 153.

The shape and number of the pair of intake through holes 152 are not particularly limited, and for example, are the shape and number that allow the liquid taken into the intake recess 153 via the screen portion 151 to flow into the emitter 120, i.e., the back surface 138 side of the emitter 120. As described above, each of the pair of intake through holes 152 is a long hole provided along the longitudinal direction orthogonal to the second protrusion 156 in the base (bottom surface of the intake recess 153) of the emitter 120. In FIG. 3B, while a pair of intake through holes 152 each appear to be a plurality of through holes present along the longitudinal direction because a plurality of second protrusions 156 are present above the long intake through hole 152, the intake through hole 152 is a long hole in the present embodiment as shown in FIG. 2B.

The flow path 143 is a flow path for communicating the intake portion 131 and the regulating unit 135, and is provided on the back surface 138 side of the emitter 120. As shown in FIGs. 2B and 3C, on the back surface 138 side of the emitter 120, the base of the emitter 120 has, at its outer edge, a protruded outer wall protruding upward and has a recess surrounded by the outer wall. The emitter 120 has, on the back surface 138 side, a substantially U-shaped groove 132 along the inner side of the outer wall of the recess and a serpentine-shaped (also referred to as a wave-shaped) groove 133 along the longitudinal direction passing through the center in the lateral direction. In the emitter 120, the groove 132 and the groove 133 serve as the flow path 143. Specifically, when the emitter 120 is disposed in the tube 110, the space between the groove 132 and the groove 133 and the inner wall of the tube 110 serves as the flow path 143. The substantially U-shaped groove 132 is a groove for communicating the pair of intake through holes 152 in the intake portion 131. The serpentine-shaped groove 133 is a groove for communicating the center of the substantially U-shaped groove 132 and a through hole 161 in the base. This serpentine shape allows the pressure of the liquid passing through the emitter 120 to be reduced. Thus, the region of the groove 133 serves as a decompression region 133 in the flow path 143. As will be described below, the through hole 161 in the base is a communication hole to the regulating unit 135.

Since the groove 132 is, for example, a connection portion with the intake portion 131, the groove 132 is also referred to as a connection groove 132, and, in the flow path 143, the region formed by the connection groove 132 is also referred to as a connection region 132. Since the groove 133 connects the connection groove 132 and the regulating unit 135 and can decompress the pressure of the liquid taken therein while allowing the liquid to flow from the connection groove 132 to the regulating unit 135, for example, the groove 133 is also referred to as a decompression groove 133, and, in the flow path 143, the region formed by the decompression groove 133 is also referred to as the decompression region 133.

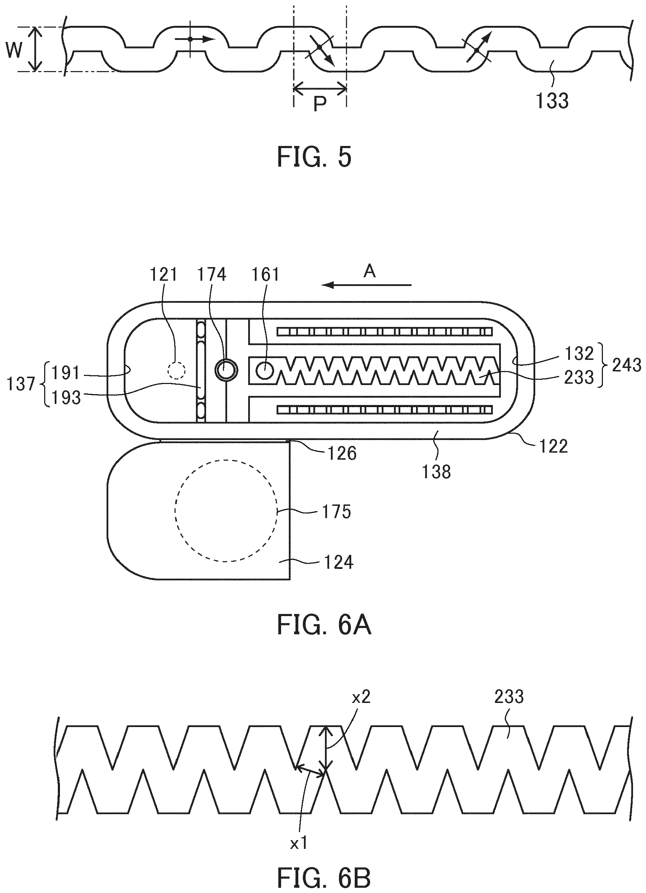

In the flow path 143, the fluctuation ratio of the cross-sectional area of the decompression region 133 in the direction perpendicular to the axial direction over the entire region is within a range of 1 ± 0.1 with reference to the smallest cross-sectional area. Here, the "axial direction" means an axial direction at a freely determined point in the decompression region 133, and the "perpendicular direction" means a direction perpendicular to the axial direction. As a specific example, FIG. 5 shows the axial direction and the perpendicular direction in the decompression region 133. As shown in FIG. 5, in the decompression region 133, the axial direction at a freely determined point is represented by an arrow, and the perpendicular direction is represented by a line passing through the freely determined point and perpendicular to the axial direction. The fluctuation ratio is, for example, 1 ± 0.1, 1 ± 0.05, or 1 ± 0.01.

In the decompression region 133, the upper limit of the smallest cross-sectional area is, for example, 0.03 mm², 0.25 mm², or 0.2 mm².

The decompression region 133 is disposed, for example, on the upstream side of the regulating unit 135. The shape of the decompression region 133 in plan view has a serpentine shape. The decompression region 133 has, for example, a plurality of protrusions 162 on its inner side surface, and the plurality of protrusions 162 protrude alternately from both side surfaces toward the center along the direction in which the liquid flows. The planar shape of the protrusion 162 is, for example, a trapezoid that narrows from the side surface toward the center. For example, in plan view, the protrusion 162 is disposed so that the tip thereof does not exceed the central axis of the decompression region 133.

The condition of the pitch of the serpentine shape in the decompression region 133 is not particularly limited. As shown in FIG. 5, the pitch is, for example, a distance P between the protrusion in one direction and the protrusion in the other direction in the width direction of the emitter 120 in the longitudinal direction of the emitter 120. The distance of the pitch P is, for example, 0.5 to 1.5 mm, 0.7 to 1.3 mm, or 0.9 to 1.1 mm. In the width direction, the distance W between the tip of the one protrusion and the tip of the other protrusion is, for example, 0.4 to 1.2 mm, 0.6 to 1 mm, or 0.7 to 0.9 mm.

The regulating unit 135 is a unit that adjusts the discharge amount of the liquid taken into the emitter 120, and is provided on the front surface 139 side of the emitter 120 on the downstream side. As shown in FIGs. 2B, 3B, 3C, and 4A, the base of the emitter 120 has the through hole 161 communicating with the flow path 143 in the vicinity of the center thereof, and has a through hole 174 communicating with the discharge portion 137 on the downstream side thereof. The former through hole 161 is a hole for introducing a liquid into a regulating recess 171 and is also referred to as an introduction through hole 161, and the latter through hole 174 is a hole for leading the liquid out of the regulating recess 171 and is also referred to as a regulating through hole or a lead-out through hole. On the front surface 139 side of the emitter 120, the base of the emitter 120 has the regulating recess 171, and the film 124 is fixed in a state of covering the inner space of the regulating recess 171. In the present embodiment, the base is the bottom surface of the regulating recess 171, the bottom surface has the regulating through hole 174 and the introduction through hole 161, and the bottom surface further includes a protruded regulating cylindrical region 172 protruding toward the front surface 139 side around the upper surface-side opening 172b of the regulating through hole 174. Furthermore, as described above, the film 124 is disposed on the front surface 139 side of the emitter body 122 in a state of covering the inside of the regulating recess 171. In the emitter 120, the regulating recess 171, the regulating cylindrical region 172, the film 124 (diaphragm portion 175), and the regulating through hole 174 serve as the regulating unit 135.

The film 124 only is required to be fixed in a state of covering the inner space of the regulating recess 171, and the fixing position thereof is not particularly limited as described above. In the film 124, a region covering the regulating recess 171 is a diaphragm portion 175. That is, the diaphragm portion 175 covers a region surrounded by the inner edge portion 171a of the upper surface of the side wall of the regulating recess 171. In the emitter 120, the inside of the regulating recess 171 is partitioned from the inside of the tube 110 by the diaphragm portion 175 in the film 124.

The shape of the upper surface-side opening 172b of the regulating through hole 174 is defined by the inner edge of the upper surface of the regulating cylindrical region 172. The inner edge of the upper surface of the regulating cylindrical region 172 is a valve seat portion 172a for the film 124. In use, when no liquid is present in the tube 110, the film 124 covering the regulating recess 171 is not in contact with the valve seat portion 172a of the regulating cylindrical region 172. In the same state, for example, the film 124 may be or may not be in contact with the edge portion 171a of the upper surface-side opening in the regulating recess 171. In use, when the liquid is present in the tube 110, the film 124 deforms so as to come into contact (close contact) with the valve seat portion 172a of the regulating cylindrical region 172 in response to the pressure of the liquid in the tube 110. Specifically, as the pressure of the liquid increases, the film 124 deforms so as to be deflected downward. At this time, the film 124, for example, comes into contact with the edge portion 171a of the upper surface-side opening in the regulating recess 171 and then comes into contact with the valve seat portion 172a of the regulating cylindrical region 172. Therefore, in the vertical direction of the emitter 120, the height of the edge portion 171a forming the upper surface-side opening of the regulating recess 171 is higher than the height of the valve seat portion 172a forming the upper surface-side opening 172b of the regulating through hole 174. It is to be noted that the film 124 may be in contact with the edge portion 171a of the upper surface-side opening of the regulating recess 171 in a state where no liquid is present in the tube 110. Hereinafter, the edge portion 171a of the upper surface-side opening in the regulating recess 171 is also referred to as a support portion.

The axial direction of the regulating recess 171 is the direction perpendicular to the bottom surface thereof and is the vertical direction of the emitter 120. The axial direction of the regulating cylindrical region 172 is the same direction as the axial direction of the regulating recess 171, and is the hollow axial direction of the regulating cylindrical region 172.

The shape of the upper surface-side opening 172b of the regulating through hole 174 may be, for example, a circular shape or a polygonal shape, and the regulating cylindrical region 172 may be, for example, a cylindrical shape or a polygonal cylindrical shape.

The regulating cylindrical region 172 has a slit 173 in a part of the upper surface of the protrusion (side wall), and the slit 173 communicates the inside and the outside of the regulating cylindrical region 172. As described above, even when the film 124 comes into contact with the entire circumference of the valve seat portion 172a of the regulating cylindrical region 172 due to the pressure of water in the tube 110, the slit 173 in the side wall of the regulating cylindrical region 172 is not closed by the film 124. Therefore, even when the film 124 comes into contact with the entire circumference of the valve seat portion 172a in the regulating recess 171, the liquid introduced into the regulating recess 171 via the introduction through hole 161 passes through the regulating through hole 174 via the slit 173, and is sent to the ejection portion 137 to be described below.

The shape of the slit 173 is not particularly limited, and for example, as shown in FIG. 3B, a part of the upper surface of the side wall in the regulating cylindrical region 172 may be deleted from the inner side toward the outer side of the side wall. The size of the slit 173 is not particularly limited, and for example, the depth is 0.1 mm, and the width in the circumferential direction of the side wall is 0.3 mm. The depth of the regulating cylindrical region 172 is not particularly limited, and may be any length as long as greater than the depth of the slit 173, for example.

The discharge portion 137 is a portion for discharging the liquid taken into the emitter 120 via the discharge port 112 of the tube 110, and is provided on the back surface 138 side in the emitter 120. As shown in FIGs. 2B, 3B, and 3C, the base of the emitter body 122 includes a discharge recess 191 on the back surface 138 side and the downstream side of the emitter 120. In the present embodiment, the base is the bottom surface of the discharge recess 191, and the regulating through hole 174 in the regulating unit 135 is provided on the bottom surface of the discharge recess 191 and the upstream side. In the emitter 120, the space of the discharge recess 191 serves as the discharge portion 137. Specifically, when the emitter 120 is disposed in the tube 110 at a site including the discharge port 112, the space between the discharge recess 191 and the inner wall of the tube 110 becomes the discharge portion 137 communicating with the discharge port 112 of the tube 110.

The shape of the discharge recess 191 is not particularly limited, and has a substantially rectangular shape in plan view, for example. For example, as shown in FIGs. 2B and 3C, the discharge recess 191 may include a plurality of protrusions 193 on its bottom surface on the downstream side of the regulating through hole 174 and on the upstream side of a site corresponding to the discharge port 112 of the tube 110. The protrusions 193 are disposed along the width direction. The protrusions 193 allow the liquid to pass therethrough and prevent foreign matters such as suspended matters in the liquid from passing therethrough, for example, as will be described below.

Next, functions of the emitter 120 and the drip irrigation tube 100 in which the emitter 120 is disposed in the tube 110 will be described.

First, an irrigation liquid is fed into the tube 110 of the drip irrigation tube 100. The irrigation liquid is not particularly limited, and examples thereof include water, liquid fertilizer, agricultural chemicals, and mixed liquids thereof. The pressure of the liquid to be fed to the tube 110 is not particularly limited, and, for example, the pressure of the liquid is preferably 0.1 MPa or less in order to perform the drip irrigation method more easily and to further prevent the tube 110 and the emitters 120 from being damaged.

The liquid introduced into the tube 110 is taken into the emitter 120 from the intake portion 131 of the emitter 120. Specifically, in the emitter 120, the liquid enters the intake recess 153 from the slit 154 or the gap between the second protrusions 156, passes through the intake through hole 152, and moves from the front surface 139 side to the back surface 138 side. When the intake portion 131 includes the screen portion 151, for example, suspended matters and the like in the liquid can be removed by the slit 154, the gap between the second protrusions 156, and the like of the screen portion 151. In addition, in the intake portion 131, for example, since the slit 154 and the gap between the second protrusions 156 have the wedge wire structure, it is possible to further suppress the pressure loss of water at the time of taking water into the intake portion 131.

The liquid taken in the intake portion 131 passes through the intake through hole 152 and reaches the connection region 132 in the flow path 143. Then, the liquid flows from the connection region 132 into the decompression region 133.

The liquid that has flowed into the decompression region 133 passes through the through hole 161 and moves to the regulating unit 135. Specifically, the liquid moves from the through hole 161 to a region between the regulating recess 171 and the regulating cylindrical region 172 in the regulating unit 135. The liquid that has moved to the regulating unit 135 passes through the regulating through hole 174 and moves to the discharge portion 137. At this time, the control of the flow rate of the liquid flowing to the discharge portion 137 by the regulating unit 135 relates to the control of the flow rate of the liquid discharged from the emitter 120 to the outside of the tube 110 via the discharge port 112 of the tube 110. Here, the control of the flow rate in the regulating unit 135 will be described with reference to FIG. 4B.

FIG. 4B shows a state in which the film 124 is not under pressure of the liquid in the tube 110. When a pressure is applied to the film 124 by the liquid in the tube 110, the film 124 deflects in the downward direction. When a further pressure is applied to the film 124, the film 124 further deflects to come into contact with the entire circumference of the valve seat portion 172a of the regulating cylindrical region 172. Thereby, the opening of the regulating cylindrical region 172 is closed by the film 124 except for the slit 173. After the opening of the regulating cylindrical region 172 being closed, the liquid is discharged to the discharge port via the slits 173.

The liquid regulated by the regulating unit 135 moves from the regulating unit 135 to the discharge portion 137 via the through hole 174. In the emitter 120, since the discharge portion 137 is disposed at a site corresponding to the discharge port 112 of the tube 110, the liquid that has moved to the discharge portion 137 is discharged to the outside of the tube 110 via the discharge port 112 of the tube 110.

In the emitter of the present invention, whether or not the cylindrical region is provided around the regulating through hole is not particularly limited. The cylindrical region can be used, for example, to adjust the height between the support portion defining the diaphragm portion of the film and the valve seat portion in the recess. That is, the cylindrical region may or may not be provided, for example, in accordance with a desired clearance between the support portion defining the diaphragm portion of the film and the valve seat portion in the recess. As a specific example, when it is desired to relatively delay the timing of pressure correction, for example, the bottom surface of the recess may be formed flat without providing the cylindrical region.

### Examples

Next, examples of the present invention will be described. The present invention, however, is not limited by the following examples.

### Example 1

An emitter 120 shown in FIGs. 3A to 3C was produced as an emitter of the present example. In the emitter 120, the conditions of the decompression region 133 of the flow path 143 were as follows.
Smallest cross-sectional area: 0.27 mm²
Cross-sectional area fluctuation ratio: 1: 1
Pitch P: 0.9 mm
Distance W: 0.8 mm
Film material: polyethylene

An emitter shown in FIGs. 6A and 6B was produced as an emitter of a comparative example. The emitter of the comparative example was the same as the emitter 120 of the present example except that the decompression region in the flow path 143 had a zigzag shape under the following conditions.
Smallest cross-sectional area: 0.27 mm²
Cross-sectional area fluctuation ratio (x1: x2): 1: 1.78
Pitch P: 0.6 mm
Distance W: 1.5
Film material: polyethylene

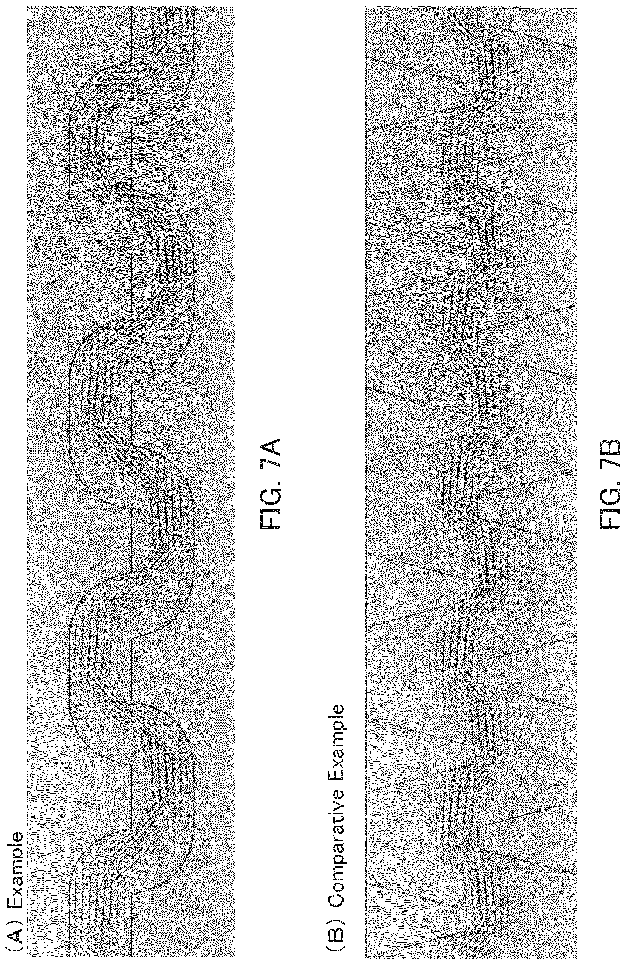

The respective emitters were each bonded to a tube having a diameter of 1.6 cm, thereby producing drip irrigation tubes of the present example and the comparative example. Then, water was allowed to pass through each tube, and the amount of water per hour discharged via each emitter in accordance with the pressure of the water passing through was checked. The temperature of the water was 23°C and 40°C. The results are shown in FIGs. 7A to 8B.

FIGs. 7A and 7B are diagrams simulating the states of water passing through the decompression regions of the emitter according to the example and the emitter according to the comparative example. FIG. 7A shows the result of the decompression region in the example and FIG. 7B shows the result of the decompression region in the comparative example. In FIGs. 7A and 7B, the water flows from left to right, and the marks in the decompression region shown in FIGs. 7A and 7B are arrows pointing to the right, which indicate the relative velocity vector of water passing through the decompression region. The longer and denser the arrows indicates that water flows without staying, and the shorter and sparser the arrows indicates that water stays. As shown in FIG. 7B, since the fluctuation ratio of the cross-sectional area is large in the decompressed region of the comparative example, it is understood that the emitter of the comparative example has a structure in which water stays at protrusions of the decompression region. In contrast, as shown in FIG. 7A, since the fluctuation ratio of the cross-sectional area is suppressed in the decompression region of the example, it is understood that the emitter of the example has a structure in which water smoothly passes through the decompression region without staying.

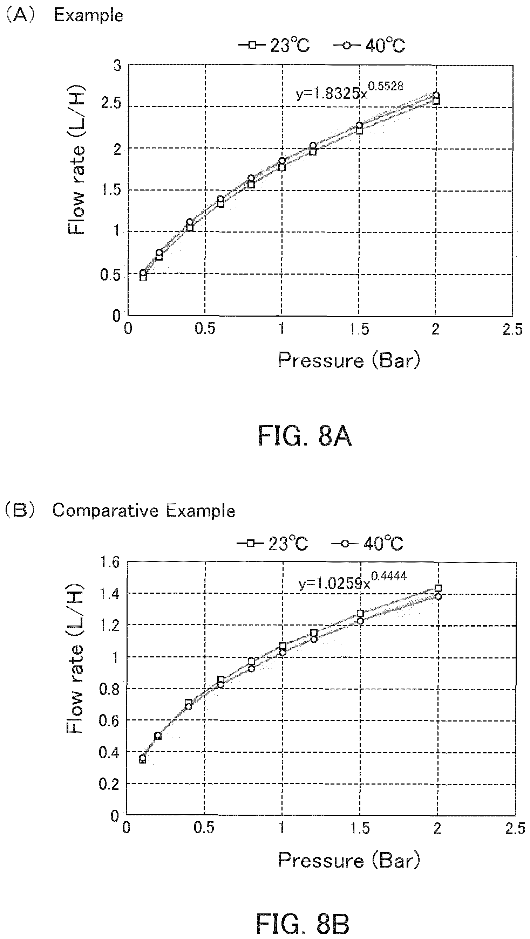

FIGs. 8A and 8B are graphs showing the relationship between the pressure of water in the tube and the discharge amount per hour of water discharged from the discharge port of the tube. FIG. 8A shows the result of the example and FIG. 8B shows the result of the comparative example. The vertical axis represents the discharge amount per hour (L/hour) and the horizontal axis represents the pressure (Bar) of water in the tube. As shown in FIG. 8B, in the emitter of the comparative example, the discharge amount was decreased regardless of the pressure in the case of passing water at 40°C as compared with the case of passing water at 23°C. In contrast, as shown in FIG. 8A, the emitter of the example was able to achieve the equivalent discharge amount at any pressure both in the case of passing water at 23°C and in the case of passing water at 40°C. As described above, the emitter of the example can prevent water from staying in the decompression region as compared with the emitter of the comparative example. Therefore, it is understood that a more effective passage of water was achieved by utilizing a temperature-dependent decrease in viscosity of water, the negative temperature dependence of the diaphragm was compensated by the positive temperature dependence of water, and as a result, a decrease in the discharge amount could be suppressed.

This application claims priority from Japanese Patent Application No. 2017-111775 filed on June 6, 2017. The entire subject matter of the Japanese Patent Applications is incorporated herein by reference.

### Industrial Applicability

According to the emitter and the drip irrigation tube of the present invention, it is possible to suppress the variations in the discharge amount of the liquid caused by the temperature of the liquid in the drip irrigation tube.

### Reference Signs List

- 100:: drip irrigation tube
- 110:: tube
- 112:: discharge port
- 120:: emitter
- 122:: emitter body
- 124:: film
- 126:: hinge portion
- 131:: intake portion
- 132:: connection region
- 133, 233:: decompression region
- 135:: regulating unit
- 137:: discharge portion
- 138:: back surface
- 139:: front surface
- 143, 243:: flow path
- 151:: intake screen portion
- 152:: intake through hole
- 153:: intake recess
- 154:: slit
- 155:: protrusion
- 156:: second protrusion
- 157:: first protrusion
- 161:: through hole
- 162:: protrusion
- 171:: regulating recess
- 171a:: support portion (edge portion)
- 172:: regulating cylindrical region
- 172a:: valve seat portion
- 172b:: upper surface-side opening of through hole
- 173:: slit
- 174:: through hole
- 175:: diaphragm portion
- 191:: discharge recess
- 193:: protrusion

## Claims

1. An emitter to be disposed on an inner wall of a tube including a discharge port, for regulating discharge of irrigation liquid from an inside of the tube to an outside of the tube via the discharge port, comprising:
an intake portion for taking in the liquid in the tube;
a regulating unit that regulates a discharge amount of the liquid taken in;
a discharge portion for discharging the taken-in liquid via the discharge port of the tube; and
a flow path communicating the intake portion and the regulating unit, wherein
the regulating unit comprises:
a recess; and
a film,
the film is fixed in a state of covering an inner space of the recess,
a region of the film covering the inner space of the recess is a diaphragm portion,
the flow path has a decompression region for decompressing the taken-in liquid,
the decompression region has a serpentine shape, and
in the decompression region, a fluctuation ratio of a cross-sectional area in a direction perpendicular to an axial direction is within a range of 1 ± 0.1 with reference to a smallest cross-sectional area.

2. The emitter according to claim 1, wherein the diaphragm portion is made of thermoplastic resin.

3. The emitter according to claim 2, wherein the thermoplastic resin is polyethylene.

4. A drip irrigation tube comprising:
a tube; and
an emitter, wherein
the emitter is the emitter according to any one of claims 1 to 3,
the tube includes a discharge port for discharging an irrigation liquid,
the emitter is disposed on an inner wall of the tube at a site including the discharge port, and
the discharge portion of the emitter and the discharge port of the tube correspond to each other.
